Europäisches Patentamt

European Patent Office

Office européen des brevets

(19)

(11) Veröffentlichungsnummer: **0 371 000**

**A1**

(12) ## EUROPÄISCHE PATENTANMELDUNG

(21) Anmeldenummer: **89890304.2**

(22) Anmeldetag: **22.11.89**

(51) Int. Cl.⁵: **H01L 31/042, A01G 9/22**

(30) Priorität: **23.11.88 AT 2878/88**

(43) Veröffentlichungstag der Anmeldung:
**30.05.90 Patentblatt 90/22**

(84) Benannte Vertragsstaaten:
**AT BE CH DE ES FR GB GR IT LI LU NL SE**

(71) Anmelder: **ELBAK Batteriewerke Gesellschaft m.b.H.**
**Puntigamer Strasse 127**
**A-8055 Graz-Puntigam Steiermark(AT)**

(72) Erfinder: **Baumann, Ernst**
**Baumgasse 29-41/62/5**
**A-1030 Wien(AT)**

(74) Vertreter: **Beer, Manfred, Dipl.-Ing. et al**
**Lindengasse 8**
**A-1070 Wien(AT)**

(54) **Schattierungseinrichtung.**

(57) Eine Schattierungseinrichtung besteht aus mehreren, zueinander parallelen, schräggestellten Schattierungslamellen (50), die auf einem Tragwerk angeordnet sind. Jede Schattierungslamelle (50) besitzt in ihrem oberen Flächenbereich (51) Solarzellen und ist in ihrem unteren Flächenbereich (52) milchglasähnlich durchscheinend (4) oder mit Spiegeln (3) ausgestattet. Die Unterseite (2) der Schattierungslamellen (50) ist diffus reflektierend ausgeführt. Die Schattierungseinrichtung verhindert den Einfall von direktem Sonnenlicht in den unter ihr angeordneten Bereich und erlaubt eine Stromgewinnung.

FIG.2

EP 0 371 000 A1

## Schattierungseinrichtung

Die Erfindung betrifft eine Schattierungseinrichtung mit mehreren nebeneinander, zur Horizontalen geneigt angeordneten und vorzugsweise zueinander parallel ausgerichteten Schattierungslamellen, an denen Solarzellen angeordnet sind.

Schattierungseinrichtungen, die für gewöhnlich als Sonnenschutz, beispielsweise im Zusammenhang mit Gewächshäusern verwendet werden, sind in verschiedenen Ausführungsformen bekannt. Darüber hinaus ist es bekannt, an Gebäuden Schattierungseinrichtungen mit verschiedenen Konstruktionsmerkmalen anzubringen.

Die US-PS 4 337 754 zeigt eine Schattierungseinrichtung mit zur Horizontalen geneigten Lamellen, die beispielsweise in einer Fensteröffnung angeordnet sind, wie dies in Fig. 1 der US-PS 4 337 754 gezeigt ist. Jede der Lamellen besitzt eine reflektierende Oberseite und eine absorbierend ausgebildete Unterseite. Dabei sind die Lamellen so angeordnet, daß steil einfallendes Sonnenlicht von der reflektierenden Oberseite reflektiert wird, ohne daß es auf die absorbierende Unterseite trifft, wogegen flach einfallendes Sonnenlicht (im Winter) auf die absorbierende Unterseite der jeweils darüber angeordneten Lamelle treffen soll. Auf diese Weise soll im Winter ein in den Lamellen enthaltenes Wärmeübertragungsmedium erwärmt werden, damit es zu Heizungszwecken herangezogen werden kann.

Die US-PS 4 143 640 beschreibt eine Anordnung eines Sonnenkollektors, der als Jalousie ausgebildet ist. Dabei besitzt jede Lamelle eine konkav gekrümmte reflektierende Oberseite und an ihrer Unterseite einen Kollektor, in dem sie von der darunter liegenden Lamelle gebündelt reflektiertes Sonnenlicht zu Heizungszwecken absorbiert. Die Lamellen sind, wie bei Jalousien üblich, um parallel zu ihrer Längsrichtung verlaufende Achsen verschwenkbar gehalten.

Auch die US-PS 4 002 159 beschreibt eine Jalousie mit mehreren Lamellen, die auf einer Seite eine Wärme absorbierende Oberfläche aufweisen, wobei die Wärme absorbierende Seite nach unten gekehrt ist. Dadurch soll absorbierte Wärme zur Erwärmung des Raumes, in dessen Fenster die Jalousie gemäß der US-PS 4 002 159 angeordnet ist, herangezogen werden.

Die DE-OS 28 41 564 beschreibt eine Sonnenschutzvorrichtung mit mehreren Lamellen, die an einem von einem Mauerwerk horizontal abstehenden Träger befestigt sind. In der DE-OS 28 41 564 ist auch ein Hinweis darauf enthalten, die Lamellen an ihrer Oberseite mit Solarzellen auszustatten. Ebenfalls ist der DE-OS 28 41 564 zu entnehmen, daß die Lamellen zwischen einer senkrechten und einer etwa um 45° geneigten Stellung verschwenkbar in ihrer Halterung gelagert sind.

Die US-PS 4 137 098 beschreibt eine Jalousie, die zur Energiegewinnung eingesetzt werden kann, wobei sowohl Strom als auch Wärme erzeugt werden können soll. Hiezu sind die Lamellen in einem verschlossenen Kasten angeordnet und an ihrer Oberseite mit mehreren Solarzellen ausgestattet, wobei die Solarzellen zueinander parallel geschaltet und an ein Stromversorgungsnetz angeschlossen sind. Zur Wärmegewinnung wird durch das Gehäuse, in dem die Lamellen angeordnet sind, Luft zirkuliert, die sich beim Durchströmen durch das Gehäuse und entlang der in diesem angeordneten Lamellen der Jalousie erwärmt. Durch das Durchleiten von Luft durch das Gehäuse, in dem die Jalousie angeordnet ist, soll auch übermäßiger Energieverlust durch das Fenster verhindert werden. Auch in der US-PS 4 137 098 ist der Gedanke geoffenbart, die Lamellen mit den Solarzellen so auszurichten, daß sie zum einfallenden Sonnenlicht jeweils den günstigsten Winkel (90°) einnehmen.

Eine Schattierungseinrichtung der im einleitenden Teil des unabhängigen Anspruches 1 genannten Gattung ist durch die DE-OS 28 41 564 oder die US-PS 4 137 098 bekannt.

Der Erfindung liegt die Aufgabe zugrunde, eine Schattierungseinrichtung der eingangs genannten Gattung anzugeben, die nicht nur für eine wirksame Abschattung von unter ihr angeordneten Räumen, beispielsweise von Gewächshäusern oder Hallen, erlaubt, sondern mit der auch mit Hilfe der an den Schattierungslamellen angeordneten Solarzellen eine wirksame Stromgewinnung möglich ist, wobei sich die beiden Ziele (Abschattung und Stromgewinnung) gegenseitig nicht nachteilig beeinflussen sollen.

Erfindungsgemäß wird dies dadurch erreicht, daß die Solarzellen im Bereich eines sich vom oberen Rand der Schattierungslamellen nach unten erstreckenden Flächenbereiches der Schattierungslamellen angeordnet sind, daß der von den Solarzellen nicht eingenommene, sich vom unteren Rand der Schattierungslamellen nach oben erstreckende Flächenbereich der Schattierungslamellen lichtdurchlässig und/oder Licht reflektierend ausgebildet ist und daß die nach unten gekehrte Fläche der Schattierungslamellen Licht diffus reflektierend ausgebildet ist.

Vorteilhafte Ausgestaltungen der Erfindung sind Gegenstand der Unteransprüche.

Weitere Einzelheiten, Merkmale und Vorteile der erfindungsgemäßen Schattierungseinrichtung ergeben sich aus der nachstehenden Beschreibung der in den Zeichnungen teils schematisch dargestellten, nicht beschränkenden Ausführungsbeispiele. Es zeigt

Fig. 1 in Seitenansicht das Prinzip der erfindungsgemäßen Schattierungseinrichtung,

Fig. 2 eine Schattierungseinrichtung in Kombination mit einem Gewächshaus,

Fig. 3 eine andere Ausführungsform von Schattierungslamellen der Schattierungseinrichtung,

Fig. 4 ein Seiltragwerk, an dem eine Schattierungseinrichtung montiert werden kann,

Fig. 5 das Seiltragwerk aus Fig. 4 in anderer Ansicht,

Fig. 6 auf einem teilweise dargestellten Seiltragwerk montierte Schattierungslamellen,

Fig. 7 eine andere Ausführungsform von auf einem Seiltragwerk montierten Schattierungslamellen,

Fig. 8 eine weitere Ausführungsform von auf über Kreuz gespannten Tragseilen montierten Schattierungslamellen,

Fig. 9 bis 11 in drei verschiedenen Ansichten eine Ausführungsform einer Befestigung von Schattierungslamellen auf Seilkreuzknoten,

Fig. 12 im Vertikalschnitt eine Schattierungseinrichtung, die kreisförmig ausgebildet ist, wobei die Schattierungslamellen nur in einer Hälfte der Schattierungseinrichtung dargestellt sind und

Fig. 13 eine Draufsicht zu Fig. 12.

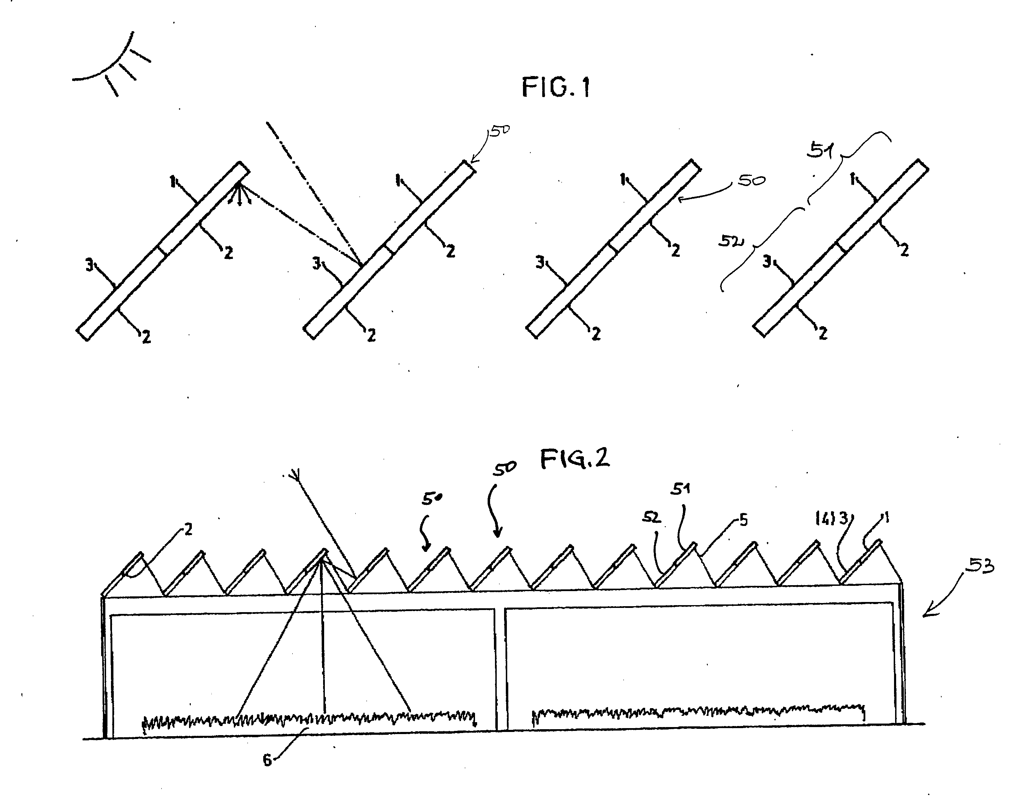

Aus der Darstellung der Schattierungslamellen 50 von Fig. 1 ist ersichtlich, daß jede Schattierungslamelle 50 in ihrem an den oberen Rand der Schattierungslamellen 50 anschließenden Flächenbereich auf ihrer Oberseite mit Solarzellen 1 bestückt ist. Der an den unteren Rand der Schattierungslamellen 50 anschließende Flächenbereich 52 derselben ist in der in Fig. 1 gezeigten Ausführungsform mit einer reflektierenden Oberfläche, z.B. mit einem Spiegel 3, versehen.

Die Unterseiten 2 der Schattierungslamellen 50 sind sowohl im oberen, die Solarzellen 1 tragenden Flächenbereich 51 als auch im unteren Flächenbereich 51 lichtreflektierend ausgebildet.

An Stelle den unteren Flächenbereich 52 der Schattierungslamellen 50 lichtreflektierend auszubilden, kann dieser auch lichtdurchlässig ausgebildet sein, wobei jedoch die Anordnung bzw. Ausgestaltung dieses Flächenbereiches 52 so gewählt ist, daß direkte Sonnenstrahlung an dieser Stelle nicht durch die Schattierungseinrichtung treten kann.

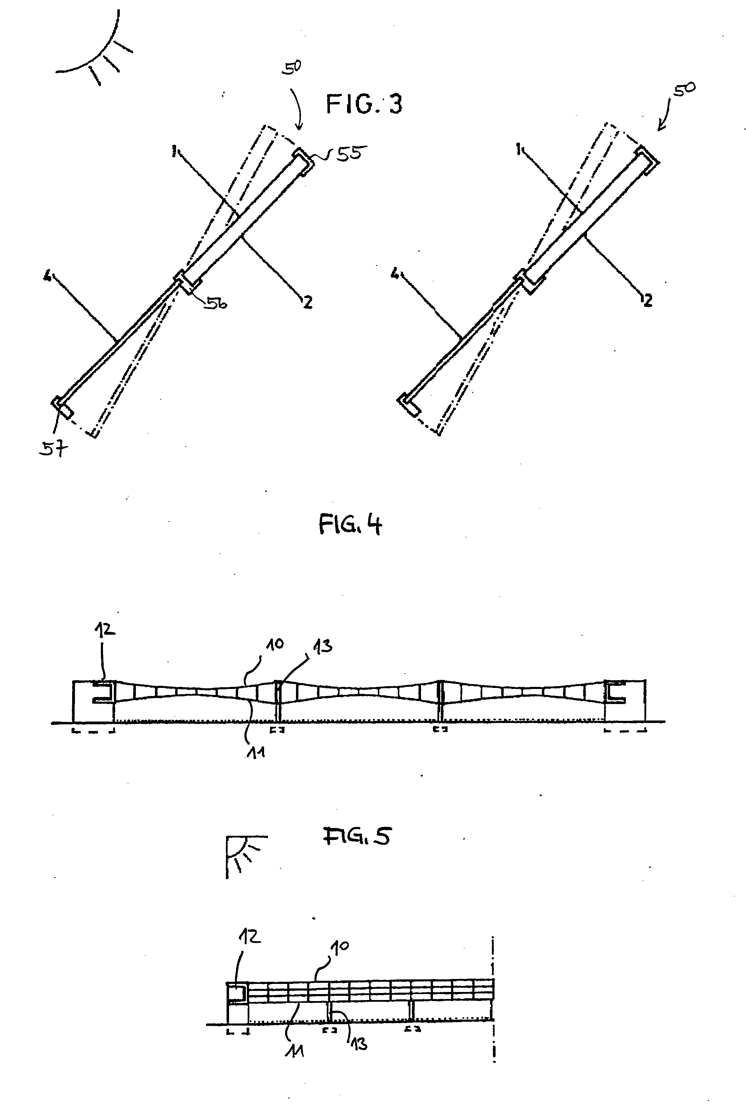

Fig. 2 zeigt, wie eine mit den in Fig. 1 gezeigten Schattierungslamellen 50 ausgestattete Schattierungseinrichtung auf einem Gewächshaus 53 angeordnet werden kann. Dabei ist auch eingezeichnet, wie die erfindungsgemäße Schattierungseinrichtung direkten Lichteinfall in den Bereich des Gewächshauses 53 unter der Schattierungseinrichtung verhindert.

Der durch die Solarzellen 1 auf den Schattierungslamellen 50 gewonnene Strom kann für den Betrieb des Gewächshauses 53 z.B. zu Kühlzwecken, zur Bewässerung bzw. Beregnung der Pflanzen 6, die im Gewächshaus angeordnet sind, herangezogen werden. Überschüssige elektrische Energie kann in das Netz eingespeist oder aber gespeichert werden.

Fig. 2 zeigt auch, daß zwischen dem unteren Rand einer Schattierungslamelle 50 und dem oberen Rand der jeweils benachbarten Schattierungslamelle 50 ein lichtdurchlässiges Fensterband 5 vorgesehen sein kann.

Aus der vorstehenden Beschreibung ist ersichtlich, daß das Innere des Gewächshauses 53 durch die erfindungsgemäße Schattierungseinrichtung vor direkter Sonneneinstrahlung geschützt ist.

Die Unterseite 2 der Schattierungslamellen 50 ist vorzugsweise weiß reflektierend ausgebildet.

Bei der in Fig. 3 gezeigten Ausführungsform sind die Schattierungslamellen 50 um eine etwa in ihrer Längsmitte angeordnete Achse verschwenkbar ausgebildet. Dadurch ist es möglich, die die Solarzellen 1 aufweisenden Flächenbereiche 51 der Schattierungslamellen 50 entsprechend dem Einfallswinkel von Sonnenlicht auszurichten.

Der seitliche Abstand der die Solarzellen 1 aufweisenden Flächenbereiche 51 einander benachbarter Schattierungslamellen 50 wird vorzugsweise so gewählt, daß die jeweils benachbarte Schattierungslamelle 50 die Solarzellen 1 der benachbarten Schattierungslamelle 50 vor direkter Sonneneinstrahlung nicht bzw. nur möglichst wenig abdeckt.

Bei niedrigem Sonnenstand verhindern die mit den Solarzellen 1 ausgestatteten oberen Flächenbereiche 51 der Schattierungslamellen 50, daß im Bereich der unteren Flächenbereiche 52 der Schattierungslamellen 50 Sonnenlicht direkt durch die Schattierungseinrichtung treten kann.

Um auch bei hohem Sonnenstand zu vermeiden, daß Sonnenlicht direkt durch die unteren Flächenbereiche der Schattierungslamellen 50 durchtritt, können wie bereits erwähnt, im unteren Flächenbereich 52 Spiegel 3 vorgesehen sein. Diese Spiegel 3 verhindern eine direkte Sonneneinstrahlung in den unter der Schattierungseinrichtung befindlichen Bereich, da sie Sonnenlicht auf die Unterseite 2 der jeweils benachbarten Schattierungslamelle 50 reflektieren, von wo sie als Streulicht in den Bereich unterhalb der Schattierungseinrichtung reflektiert wird.

Um das Streulicht wirksamer zu gestalten, kann die Unterseite 2 der Schattierungslamellen 50 durch Lamellen, Rippen od. dgl. profiliert ausgebildet sein.

Eine andere Möglichkeit der Ausgestaltung des unteren Flächenbereiches 52 der Schattierungslamellen 50 besteht darin, daß dort eine milchglasähnliche, lichtdurchlässige Abdeckung 4 vorgesehen ist. Diese Abdeckung kann auch eingefärbt sein.

In Fig. 3 ist auch angedeutet, daß die Schattierungslamellen 50 eine im wesentlichen rahmenförmige Konstruktion aufweisen können, wobei die Solarzellen 1 in den oberen Rahmenhälften 55 - 56, die auch in Längsrichtung unterteilt sein können, eingesetzt sind, wogegen die Spiegel 3 oder die Abdeckung 4 im unteren Flächenbereich 52 der Schattierungslamellen 50 in den dort vorgesehenen Rahmen 56 - 57 eingesetzt sind. Aus Fig. 3 ist auch ersichtlich, daß die Rahmen 55, 56, 57 von profilierten bzw. genuteten Profilleisten gebildet werden.

Die Schattierungslamellen 50 können auch in Längsrichtung geknickt ausgebildet sein, wie dies weiter unten noch beschrieben werden wird, so daß der obere Flächenbereich 51 jeder Schattierungslamelle 50 unter einem anderen Winkel zur Horizontalen geneigt ist als der untere Flächenbereich 52 derselben.

In den dargestellten und beschriebenen Ausführungsbeispielen sind die benachbarten Schattierungslamellen 50 im wesentlichen in einer horizontalen Ebene nebeneinanderliegend angeordnet. Es ist aber auch möglich, die Schattierungslamellen 50 in zur Horizontalen geneigten Ebenen nebeneinanderliegend anzuordnen.

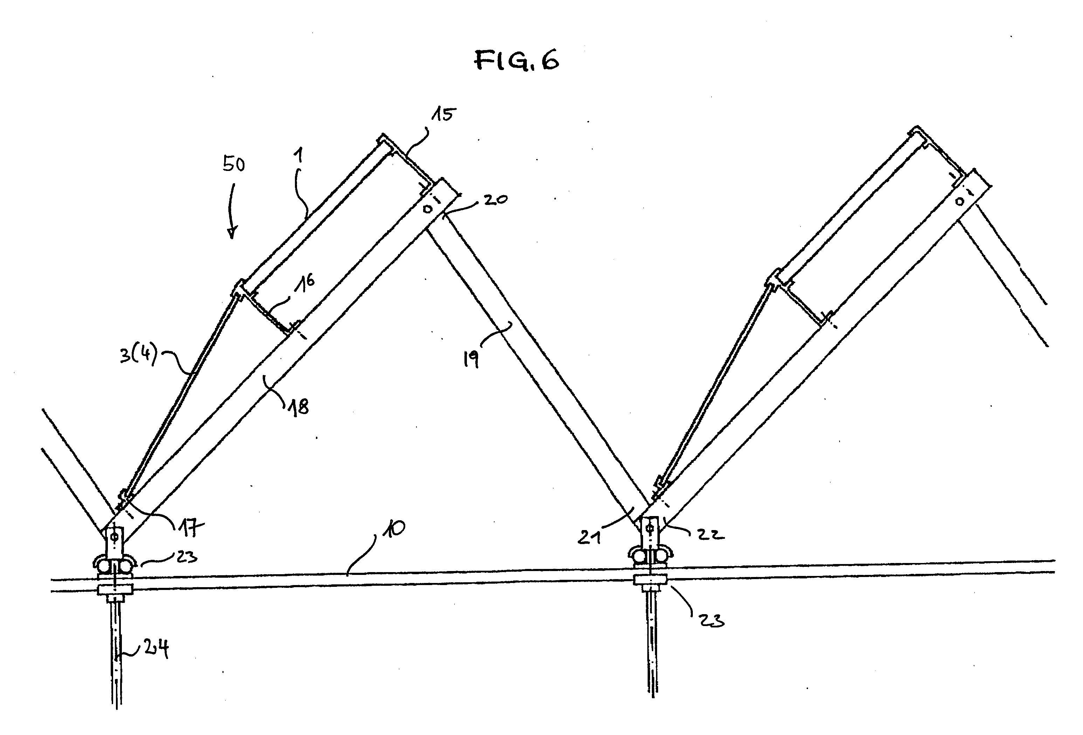

In Fig. 4 und 5 ist ein aus gekreuzten Seilen gebildetes Tragwerk für eine erfindungsgemäße Schattierungseinrichtung dargestellt.

Das Seiltragwerk besteht aus einer oberen Lage 10 einander kreuzender, gespannter Seile und aus einer unteren Lage 11 ebenfalls kreuzweise gespannter Seile. Die Enden der Seile beider Lagen 10 und 11 sind an einem äußeren Träger 12 befestigt und zwischen den Trägern 12 durch Stützen 13 abgestützt.

Bei der in Fig. 6 gezeigten Ausführungsform einer Schattierungseinrichtung sind die Schattierungslamellen 50 auf einem Tragwerk aus gespannten Seilen, wie dies schematisch in den Fig. 4 und 5 gezeigt ist, befestigt. Als Träger für die Solarzellen 1 und die Spiegel 3 bzw. die milchglasähnlichen Abdeckungen 4 dienen bei dem in Fig. 6 gezeigten Ausführungsbeispiel Rahmen aus Profilleisten 15, 16 und 17, die an zur Horizontalen geneigten Streben 18 befestigt sind. Die unteren Enden der Streben 18 sind über Seilklemmen 23 an Kreuzungspunkten der oberen Lage der gespannten Tragseile festgeklemmt. Weiters sind Stützstreben 19 vorgesehen, deren oberes Ende jeweils im Bereich des oberen Randes der Streben 18 angreift und deren unteres Ende 21 so wie das untere Ende 22 der Streben 18 an den Seilklemmen 23 befestigt ist. In Fig. 5 ist noch angedeutet, daß die obere Lage 10 der gekreuzt gespannten Tragseile, die auch paarweise vorgesehen sein können, mit der unteren Lage 11 durch vertikale Verbindungsstücke 24 verbunden sein kann.

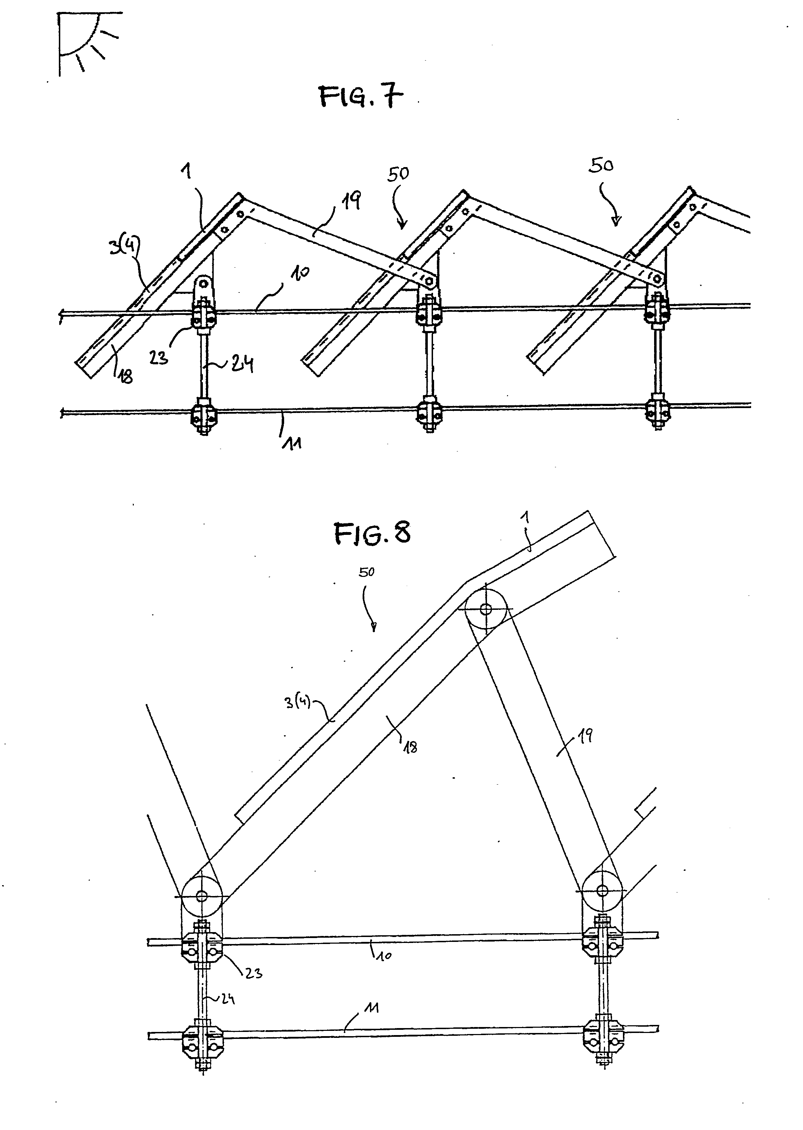

Bei der in Fig. 7 gezeigten Ausführungsform sind die die Bestandteile 1, 3, 4 der Schattierungslamellen 50 tragenden Streben 18 etwa in ihrer Mitte an den Seilklemmen 23 befestigt. Die Stützstreben 19 greifen mit einem Ende am oberen Ende der Streben 18 an und sind mit ihrem anderen Ende an der Seilklemme 23 der benachbarten Schattierungslamelle 1 befestigt.

Die in Fig. 8 gezeigte Ausführungsform von Schattierungslamellen 50 besitzt geknickt ausgebildete Streben 18 für die Solarzellen 1 und die Spiegel 3 bzw. die milchglas ähnlichen Scheiben 4, wobei die Stützstreben 19 im Bereich des Knickes der Streben 18 an diesen befestigt sind.

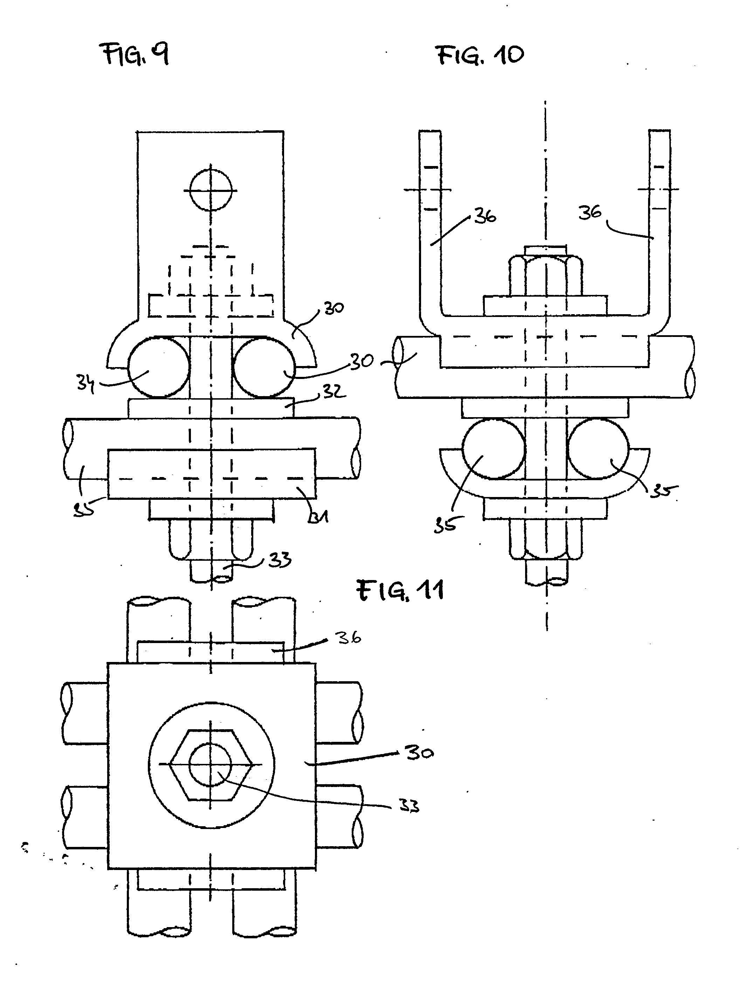

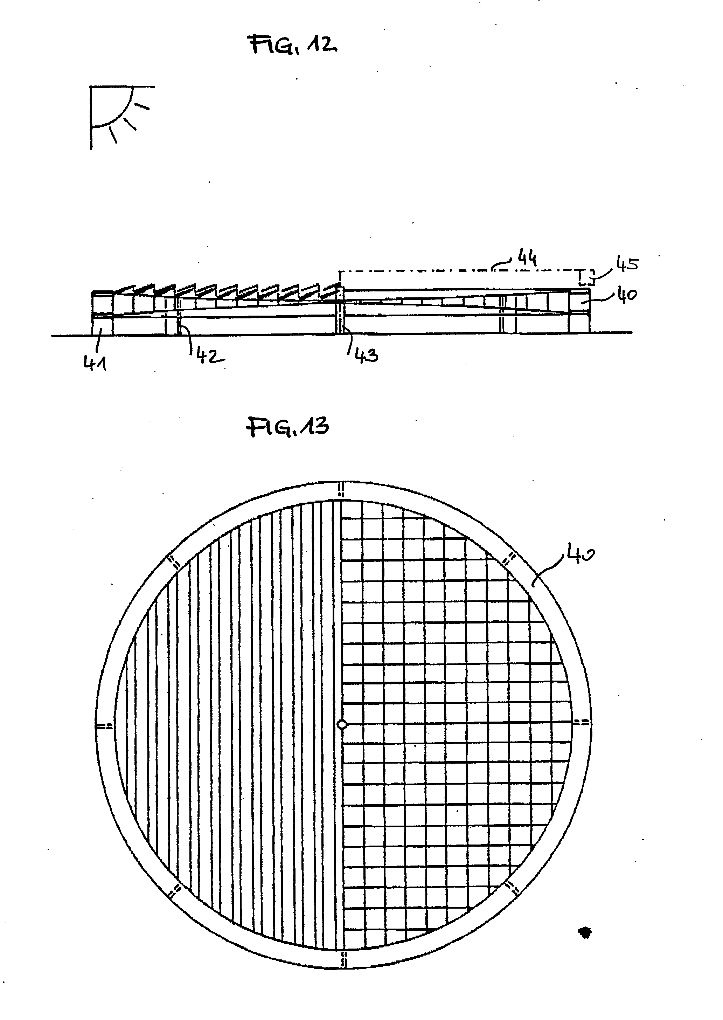

Die Fig. 9 bis 11 zeigen eine Ausführungsform einer Seilklemme 23, die zur Befestigung der Schattierungseinrichtung bzw. ihrer die Schattierungslamellen 50 tragenden Streben 18 und Stützstreben 19 am Seiltragwerk. Aus den Fig. 9 bis 11 ist erkennbar, daß ein flach U-förmiger, oberer Klemmteil 30, ein flach U-förmiger, unterer Klemmteil 31 und ein dazwischen liegendes Druckstück 32 vorgesehen ist, die durch eine Spannschraube 33 zusammengespannt sind, so daß die Seile 34 bzw. 35 der oberen Lage aus gekreuzten, gespannten Tragseilen geklemmt werden. Aus den Fig. 9 bis 11 ist auch ersichtlich, daß die Seile 34 und 35 jeweils paarweise angeordnet sind.

Aus den Fig. 9 bis 11 ist auch zu entnehmen, daß am oberen flach U-förmigen Klemmteil 30 zwei nach oben ragende Laschen 36 vorgesehen sind, an welchen die Streben 18 bzw. Stützstreben 19 der Schattierungslamellen 50 befestigt werden können.

In den Fig. 12 und 13 ist eine Schattierungseinrichtung gezeigt, die auf einem Tragwerk aus zwei Lagen 10 und 11 gespannter, einander kreuzender Tragseile montiert ist, wobei die gegebenenfalls paarweise angeordneten Tragseile an einem kreisförmigen Ring 40 befestigt sind. Der Ring ist über Stützen 41 gegenüber dem Boden abgestützt. Auch innerhalb des Ringes 41 können Stützen 42 für das Seiltragwerk vorgesehen sein.

Es versteht sich, daß die gesamte Anordnung um eine lotrechte Achse verdrehbar angeordnet sein kann, damit die Solarzellen 1 an den Schattierungslamellen 50 jeweils zum einfallenden Sonnenlicht möglichst günstig ausgerichtet werden können.

Im in den Fig. 12 und 13 gezeigten Ausführungsbeispiel ist in der Mitte eine Säule 43 vorgesehen, von der eine in Fig. 12 nur schematisch angedeutete Brücke 44 ausgeht, die entweder begehbar ausgebildet ist und/oder an welcher Brücke 44 ein Wartungskorb 45 verfahrbar gelagert ist. Das freie Ende der Brücke 44 ist am Ring 41 beispielsweise über Räder oder Rollen (nicht gezeigt) abgestützt.

## Ansprüche

1. Schattierungseinrichtung mit mehreren nebeneinander, zur Horizontalen geneigt angeordneten und vorzugsweise zueinander parallel ausgerichteten Schattierungslamellen (50), an denen Solarzellen (1) angeordnet sind, dadurch gekennzeichnet, daß die Solarzellen (1) im Bereich eines sich vom oberen Rand der Schattierungslamellen (50) nach unten erstreckenden Flächenbereiches (51) der Schattierungslamellen (50) angeordnet sind, daß der von den Solarzellen (1) nicht eingenommene, sich vom unteren Rand der Schattierungslamellen (50) nach oben erstreckende Flächenbereich (52) der Schattierungslamellen (50) lichtdurchlässig (3 ) und/oder Licht reflektierend (4) ausgebildet ist und daß die nach unten gekehrte Fläche (2) der Schattierungslamellen (50) Licht diffus reflektierend ausgebildet ist.

2. Schattierungseinrichtung nach Anspruch 1, dadurch gekennzeichnet, daß der obere Flächenbereich (51) der Schattierungslamellen (50), in dem Solarzellen (1) angeordnet sind, im wesentlichen die Hälfte der quer zur Längserstreckung der Schattierungslamellen (50) gemessenen Breite derselben einnimmt.

3. Schattierungseinrichtung nach Anspruch 1 oder 2, dadurch gekennzeichnet, daß der untere Flächenbereich (52) der Schattierungslamellen (50) mit Spiegeln (4) bestückt ist.

4. Schattierungseinrichtung nach Anspruch 1 oder 2, dadurch gekennzeichnet, daß der untere Flächenbereich der Schattierungslamellen (50) mit milchglasähnlich durchscheinenden Platten (3) ausgestattet ist.

5. Schattierungseinrichtung nach einem der Ansprüche 1 bis 4, dadurch gekennzeichnet, daß die nach unten gekehrte Fläche (2) der Schattierungslamellen (50) weiß ausgeführt ist.

6. Schattierungseinrichtung nach einem der Ansprüche 1 bis 5, dadurch gekennzeichnet, daß die nach unten gekehrte Fläche (2) der Schattierungslamellen (50) durch Anordnung von Lamellen, Rippen od. dgl. diffus reflektierend ist.

7. Schattierungseinrichtung nach einem der Ansprüche 1 bis 6, dadurch gekennzeichnet, daß zwischen dem unteren Längsrand jeder Schattierungslamelle (50) und dem oberen Längsrand der diesem, unteren Längsrand benachbarten Schattierungslamelle (50) eine lichtdurchlässige Abdeckung (5) angeordnet ist.

8. Schattierungseinrichtung nach einem der Ansprüche 1 bis 7, dadurch gekennzeichnet, daß die Schattierungslamellen (50) zum Ändern ihrer Schräglage um parallel zu ihrer Längserstreckung verlaufende Achsen verschwenkbar gelagert sind.

9. Schattierungseinrichtung nach einem der Ansprüche 1 bis 8, dadurch gekennzeichnet, daß sie um eine im wesentlichen lotrechte Achse verdrehbar gelagert ist.

10. Schattierungseinrichtung nach einem der Ansprüche 1 bis 9, dadurch gekennzeichnet, daß die Schattierungslamellen einen Rahmen (15, 16, 17; 55, 56, 57) aufweisen, der durch eine längslaufende, ggf. profilierte Leiste (16; 56) in den oberen (51) und den unteren Flächenbereich (52) unterteilt ist, und daß die Flächenbereiche (51, 52) ihrerseits durch Sprossen in vorzugsweise rechteckige Felder unterteilt sind.

11. Schattierungseinrichtung nach einem der Ansprüche 1 bis 10, dadurch gekennzeichnet, daß die Schattierungslamellen (50) über gewinkelte Träger (18, 19) an einem Tragwerk (10, 11) abgestützt sind.

12. Schattierungseinrichtung nach einem der Ansprüche 1 bis 11, dadurch gekennzeichnet, daß die die Schattierungslamellen (50) tragenden Schenkel (18) der gewinkelten Träger (18, 19) zwischen ihren Enden am Tragwerk (10, 11) abgestützt sind und daß die Enden der anderen Schenkel (19) der Träger (18, 19) am Tragwerk im Abstützpunkt des jeweils benachbarten, die Schattierungslamellen (50) tragenden Schenkels (18) abgestützt sind.

13. Schattierungseinrichtung nach einem der Ansprüche 1 bis 10, dadurch gekennzeichnet, daß der die Solarzellen (1) aufweisende obere Flächenbereich (51) der Schattierungslamellen (50) mit der Horizontalen einen kleineren Winkel einschließt als der untere Flächenbereich (52) der Schattierungslamellen (50).

14. Schattierungseinrichtung nach Anspruch 13, dadurch gekennzeichnet, daß die Schattierungslamellen (50) an ihrem unteren Längsrand an einem Tragwerk (10, 11) abgestützt sind und daß Stützstreben (19) vorgesehen sind, die mit ihrem oberen Ende (20) an den Schattierungslamellen (50) angreifen und die mit ihrem anderen, unteren Ende (21) am unteren Längsrand (22) der benachbarten Schattierungslamellen (50) am Tragwerk (10) abgestützt sind.

15. Schattierungseinrichtung nach Anspruch 14, dadurch gekennzeichnet, daß die Stützstreben (19) am oberen Längsrand der Schattierungslamelle (50) angreifen.

16. Schattierungseinrichtung nach Anspruch 14, dadurch gekennzeichnet, daß die Stützstreben (19) an den Schattierungslamellen (50) zwischen ihren Längsrändern, insbesondere am unteren Rand des mit Solarzellen (1) versehenen Flächenbereiches (51) der Schattierungslamellen (50) angreifen.

17. Schattierungseinrichtung nach einem der Ansprüche 1 bis 16, dadurch gekennzeichnet, daß die Solarzellen (1) und die reflektierenden und/oder lichtdurchlässigen Flächenelemente (4, 3) der Schattierungslamellen (50) mit ihren oberen und unteren Längsrändern in längslaufenden Nuten von Profilleisten (15, 16, 17; 55, 56, 57) der Schattierungslamellen (50) aufgenommen sind.

18. Schattierungseinrichtung nach Anspruch 17, dadurch gekennzeichnet, daß die Profilleisten (15, 16, 17) an den Trägern (18) der Schattierungslamellen (50) nach oben weisend befestigt sind.

19. Schattierungseinrichtung nach einem der Ansprüche 1 bis 18, dadurch gekennzeichnet, daß die Solarzellen (1) zu den Trägern (18) parallel ausgerichtet sind.

20. Schattierungseinrichtung nach einem der Ansprüche 1 bis 19, dadurch gekennzeichnet, daß die reflektierenden und/oder lichtdurchlässigen Flächenelemente (4, 3) mit den Trägern (18) einen spitzen Winkel einschließen.

21. Schattierungseinrichtung nach einem der Ansprüche 11 bis 20, dadurch gekennzeichnet, daß das Tragwerk gespannte Seile aufweist.

22. Schattierungseinrichtung nach Anspruch 21, dadurch gekennzeichnet, daß einander unter einem rechten Winkel kreuzende Seile vorgesehen sind.

23. Schattierungseinrichtung nach Anspruch 21 oder 22, dadurch gekennzeichnet, daß die Seile paarweise angeordnet sind.

24. Schattierungseinrichtung nach einem der Ansprüche 21 bis 23, dadurch gekennzeichnet, daß wenigstens zwei mit Höhenabstand voneinander angeordnete Lagen (10, 11) von einander gegebenenfalls kreuzenden Seilen bzw. Seilpaaren vorgesehen sind, und daß die Lagen (10, 11) an den Abstützpunkten (23) der Schattierungslamellen (50) miteinander durch zu den Ebenen der Seillagen (10, 11) senkrechte Verbindungsglieder (24) verbunden sind.

25. Schattierungseinrichtung nach einem der Ansprüche 21 bis 24, dadurch gekennzeichnet, daß die Schattierungslamellen (50) bzw. deren Rahmen (15, 16, 17; 55, 56, 57) oder Träger (18, 19) über Seilklemmen (23), die Laschen (36) zur Befestigung der Schattierungslamellen bzw. deren Rahmen oder Träger aufweisen, an den Seilen (34, 35) befestigt sind.

26. Schattierungseinrichtung nach Anspruch 25, dadurch gekennzeichnet, daß die Seilklemmen (23) getrennte Aufnahmen (30, 31, 32) für einander kreuzende Seile (34, 35) bzw. Seilpaare besitzen.

27. Schattierungseinrichtung nach einem der Ansprüche 21 bis 26, dadurch gekennzeichnet, daß die Lagen (10, 11) aus Seilen (34, 35) im Inneren eines Ringes (40) gespannt sind.

28. Schattierungseinrichtung nach Anspruch 27, dadurch gekennzeichnet, daß über der Schattierungseinrichtung eine Brücke (44) vorgesehen ist, die an einer in der Mitte des Ringes (40) stehenden Säule (41) gelagert ist und deren äußeres Ende über Laufräder od. dgl. am Ring (40) abgestützt ist.

29. Schattierungseinrichtung nach Anspruch 28, dadurch gekennzeichnet, daß die Brücke (44) begehbar ist.

30. Schattierungseinrichtung nach Anspruch 28, dadurch gekennzeichnet, daß an der Brücke (44) ein in Längsrichtung der Brücke verschiebbarer Wagen (45) geführt ist.

# FIG.1

# FIG.2

EP 0 371 000 A1

FIG. 3

FIG. 4

FIG. 5

FIG.6

FIG. 7

FIG. 8

FIG. 9

FIG. 10

FIG. 11

FIG. 12

44

45

40

41    42    43

FIG. 13

40

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 353 026 (MIQUEL) <br> * Seite 5, Zeilen 15-23; Seite 6, Zeilen 15-35; Seite 7, Zeilen 21-37; Seite 10, Zeilen 30-33; Figuren 4-6 * | 1,3,8,9 | H 01 L 31/042 <br> A 01 G 9/22 |
| A | | 2 | |
| | --- | | |
| Y | US-A-4 410 757 (STAMMINGER et al.) <br> * Spalte 3, Zeile 7 - Spalte 4, Zeile 24; Figuren 2,3 * | 1,3,8,9 | |
| A | | 13 | |
| | --- | | |
| A | EP-A-0 028 820 (ZÜLLIG) <br> * Seite 3; Figuren 1-5 * <br> --- | 1 | |
| A | US-A-4 373 308 (WHITTAKER) <br> * Spalte 2, Zeile 42 - Spalte 3, Zeile 37; Figuren 1-3 * <br> --- | 1 | |
| A | EP-A-0 218 858 (ERNO GmbH) <br> * Spalte 3, Zeilen 23-39; Figuren 1,4 * <br> --- | 1,3 | |
| A | DE-A-2 726 629 (EFFENBERGER) <br> * Seite 14, Zeilen 13-21; Seite 19, Zeilen 31-36; Seite 20, Zeilen 21-34; Seite 21, Zeilen 1-16; Figuren 4,6,7 * <br> --- | 1,2,4,7 | **RECHERCHIERTE SACHGEBIETE (Int. Cl.5)** <br><br> H 01 L <br> A 01 G <br> F 24 J <br> E 06 B |
| A | FR-A-2 438 802 (GREZE) <br> * Seite 3, Zeilen 3-14; Figuren 1,2 * <br> --- | 1 | |
| A | EP-A-0 057 486 (STICHTING BOUWCENTRUM) <br> * Seite 7, Zeilen 6-27; Figuren 3,4 * <br> ---      -/- | 1,4 | |

Der vorliegende Recherchenbericht wurde für alle Patentansprüche erstellt

| Recherchenort | Abschlußdatum der Recherche | Prüfer |
|---|---|---|
| DEN HAAG | 15-02-1990 | BELTZUNG F.C. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 116 718 (YERKES et al.) * Spalte 3, Zeile 10 - Spalte 4, Zeile 2; Spalte 4, Zeilen 34-43; Figuren 4-7 * --- | 1,6 | |
| A | DE-A-2 830 745 (KÖSTER) * Seite 7, Zeilen 27-36; Seite 10, Zeile 23 - Seite 11, Zeile 5; Figuren 1,5 * --- | 1 | |
| A | PATENT ABSTRACTS OF JAPAN, Band 10, Nr. 5 (E-372)[2062], 10. Januar 1986; & JP-A-60 169 173 (KOGYO GIJUTSUIN) 02-09-1985 --- | 1 | |
| A | DE-A-3 643 487 (ZERNA et al.) * Spalte 3, Zeile 58 - Spalte 4, Zeile 13; Figur 1 * --- | 1 | |
| A | US-A-4 219 008 (SCHULTZ) * Spalte 4, Zeilen 6-18,33-43; Figuren 1,2 * --- | 1,5 | **RECHERCHIERTE SACHGEBIETE (Int. Cl.5)** |
| A | US-A-4 392 009 (NAPOLI) * Spalte 2, Zeilen 28-44; Figur 1 * ----- | 1,10 | |

Der vorliegende Recherchenbericht wurde für alle Patentansprüche erstellt

| Recherchenort | Abschlußdatum der Recherche | Prüfer |
|---|---|---|
| DEN HAAG | 15-02-1990 | BELTZUNG F.C. |